# EUROPÄISCHE PATENTANMELDUNG

(11) **EP 1 240 930 A1**
(43) Veröffentlichungstag der Anmeldung: **18.09.2002**
(21) Anmeldenummer: 02004538.1
(22) Anmeldetag: 27.02.2002
(51) Int. Cl.: B01D 29/01, B01D 29/11, B01D 29/21, B01D 46/52

(54) **Verfahren und Vorrichtung zur Herstellung eines Fluidfilterelementes**

(30) Priorität: 16.03.2001 DE 10112837
(71) Anmelder: JACOBI Systemtechnik GmbH, 01474 Weissig bei Dresden (DE)
(72) Erfinder: Kleingünther, Ingo, 01187 Dresden (DE); Kleingünther, Lars, 01309 Dresden (DE)
(74) Vertreter: Heinze, Ekkehard, Dipl.-Phys. Dr.

(57) **Zusammenfassung**

Verfahren zur Herstellung eines Fluidfilterelementes, das eine zickzack- oder mäanderförmig gefaltete und durch Verklebungen der Faltenwände fixierte Lage eines flächigen Filtermaterials aufweist, wobei die Verklebung durch linearen oder punktuellen Auftrag mittels eines Heißklebers erfolgt, wobei der Heißkleber nach dem Auftrag mit einem Kühlgas aktiv gekühlt wird.

## Beschreibung

Die Erfindung betrifft ein Verfahren zur Herstellung eines Fluidfilterelementes nach dem Oberbegriff des Anspruchs 1 sowie eine Vorrichtung zur Durchführung dieses Verfahrens.

Fluidfilterelemente der im Oberbegriff von Anspruch 1 erwähnten Art sind seit langem bekannt und zur Schwebstofffilterung von Fluiden, insbesondere als Luftfilterelemente in der Klimatechnik und bei Verbrennungskraftmaschinen, massenhaft im praktischen Einsatz. Derartige Fluidfilter müssen - insbesondere im Einsatz als vorgeschaltetes Schwebstofffilter bei großen und teuren Verbrennungskraftmaschinen, wie etwa Gas-turbinen - hohen Ansprüchen an die Lebensdauer und Zuverlässigkeit genügen, doch zugleich kostengünstig sein.

Diesbezüglich wurden in den letzten Jahren mit neuen Filterkonstruktionen und daran angepaßten, technologisch anspruchsvollen Verfahren zum Auftrag des Klebstoffs (wie in der WO99/28012 der Anmelderin beschrieben) wesentliche Fortschritte erreicht.

Speziell bei der Herstellung von Fluidfilterelementen, bei denen die Faltenwände durch abschnittsweise relativ hohe (und damit voluminöse) Klebstofffäden miteinander verbunden sind - wie in der o. g. PCT-Anmeldung der Anmelderin vorgeschlagen -, dauert die vollständige Abkühlung des Heißklebers zur endgültigen Fixierung der Faltenwände nach den Messungen der Erfinder sehr lange. Desweiteren hat sich gezeigt, daß ein Ablängen einzelner Fluidfilterelemente bzw. "Filterpakete" aus dem gefalteten und verklebten Filtermaterial und die weitere Handhabung vor einer restlosen Aushärtung des Klebstoffs zu kritischen Qualitätseinbußen führen kann. Andererseits erfordert die Lagerung des gefalteten und verklebten Filtermaterials zur vollständigen Abkühlung vor der Konfektionierung angesichts der langen Auskühlzeiten eine sehr lange Abtransport- und Lagerstrecke der Herstellungsanlage. Die Anlage hat damit auch einen großen Flächenbedarf, und sowohl der anlagentechnische Aufwand als auch der Flächenbedarf treiben die Kosten der Filterelemente in die Höhe.

Der Erfindung liegt daher die Aufgabe der Bereitstellung eines verbesserten, insbesondere mit geringerer Anlagengröße und verringertem Flächenbedarf auskommenden Verfahrens der gattungsgemäßen Art sowie einer Vorrichtung zur Durchführung dieses Verfahrens zugrunde.

Diese Aufgabe wird hinsichtlich ihres Verfahrensaspektes durch ein Verfahren mit den Merkmalen des Anspruchs 1 und hinsichtlich ihres Vorrichtungsaspektes durch eine Vorrichtung mit den Merkmalen des Anspruchs 14 gelöst.

Aus den obigen Untersuchungen und Erkenntnissen der Erfinder ergibt sich als Kerngedanke der vorgeschlagenen Lösung die aktive Kühlung des Heißklebers nach seinem Auftrag auf das Filtermaterial zur Verkürzung der Aushärtungszeit. Ein weiterer wesentlicher Gedanke der Erfindung besteht in dem Einsatz eines Kühlgases als Kühlmedium. Hiermit ist eine einfache und rückstandsfreie Kühlung möglich, und es bedarf (anders als beim Einsatz einer Kühlflüssigkeit) keiner aufwendigen Nachbehandlungsschritte.

Bei neuzeitlichen Filteraufbauten, wie sie von der Anmelderin entwickelt wurden und hergestellt werden, erfordert insbesondere der Einsatz von Klebstofffäden großer Höhe zur Realisierung von Filterelementen mit großer Faltenhöhe und hohem Faltenabstand eine ausgefeilte Einstellung der Viskositäts-Zeit-Kurve des Klebstoffs vom Austritt aus einer Klebstoffdüse bis zum Abschluß der Faltung des Filtermaterials. Nach den angestellten Untersuchungen wirken sowohl ein zu "kalter" Klebstoffauftrag als auch ein zu langes Heißbleiben des Klebstoffs qualitätsmindernd. In dem einen Extrem wird keine ausreichend zugfeste Verbindung zwischen Klebstoff und Filtermaterial ausgebildet oder die beim Falten miteinander in Kontakt kommenden Oberflächen des Klebstoffs verbinden sich nicht mehr hinreichend miteinander. Im anderen Extrem läßt sich die erforderliche Höhe der Klebstofffäden nicht erreichen und/oder die Klebstofffäden werden beim Falten zu stark plastisch deformiert.

Zur Vermeidung dieser Nachteile wird mit der Erfindung eine "Modellierung" der Klebstofffäden bzw. -punkte durch gezielte Temperierung bewirkt.

In einer bevorzugten Ausführung der Erfindung wird als Kühlgas die aufbereitete, insbesondere gefilterte, und gekühlte Abluft verwendet, die im Filterherstellungsprozeß ohnehin anfällt und aus Umweltschutzgründen auch notwendigerweise aufbereitet werden muß. Solche Abluft fällt bei der Herstellung von Fluidfilterelementen aus geprägten Filtermaterialbahnen insbesondere im Prägeschritt an, wo Bestandteile des Filtervlieses in die Umgebungsluft gelangen und die Luft daher aus Gründen des Gesundheitsschutzes für das Bedienpersonal der Anlage abgesaugt wird.

In einer entsprechenden Ausführung der Vorrichtung zur Durchführung des Verfahrens weist die Kühlgas-Zuführungseinrichtung mithin eine Abluft-Aufbereitungs- und Kühleinrichtung auf. Hierzu gehört insbesondere eine Filterstufe zur Feinstfilterung der Abluft und ein Wärmetauscher, und die Luftförderung wird hier durch einen leistungsstarken Abluftventilator bewirkt.

In einer weiteren bevorzugten Ausführung wird das Kühlgas - also insbesondere die abgekühlte Abluft - dem Heißkleber bzw. dem Filtermaterial mit dem aufgetragenen Heißkleber "portioniert" in mehreren Phasen des sich an den Klebstoffauftrag anschließenden Falt- und Transportvorganges zugeführt. Hierdurch wird eine gezielte schrittweise Abkühlung realisiert, die (wie entsprechende Untersuchungen der Erfinder gezeigt haben)" zu einer hohen Qualität der hergestellten Filterelemente beiträgt. Es wurde nämlich festgestellt, daß sich mit einer schrittweisen Abkühlung zunächst ein ausreichendes Eindringen des noch heißen Klebers in das Filtermaterial erreichen läßt, bevor durch die aktive Kühlung eine Verfestigung der Oberflächenschicht der Klebstofffäden bzw. -punkte eintritt und ein weiteres Eindringen in das Filtermaterial gestoppt wird. Eine plötzliche Abkühlung zu schnell nach dem Klebstoffauftrag kann hingegen dazu führen, daß Kleber nicht ausreichend tief in das Filtermaterial eindringt und im Endergebnis keine ausreichende Haftung zwischen dem Filtermaterial und den Klebstoffspuren erreicht wird.

Die Herstellungsanlage hat für diese Verfahrensführung eine Kühlgas-Zuführungseinrichtung mit einer Mehrzahl von Kühlgas-Austrittsbereichen längs des Anlagenteiles, in dem das Falten des mit Kleber versehenen Filtermaterials und der Abtransport des gefalteten Materials ausgeführt werden.

Weiter hat es sich als zweckmäßig erwiesen, das Kühlgas von beiden Oberflächen des Filtermaterials her zuzuführen - insbesondere dann, wenn (wie bei modernen Filterelementen mit dem hier in Rede stehenden Aufbau üblich) auch von beiden Seiten her ein Klebstoffauftrag erfolgt ist. Hierdurch erhöht sich zwar der anlagentechnische Aufwand, der Vorteil einer gleichmäßigen Abkühlung des Klebstoffs auf beiden Materialoberflächen rechtfertigt aber diesen erhöhten Aufwand. Entsprechend weist die Kühlgas-Zuführungseinrichtung beidseits des Filtermaterials angeordnete Gasaustrittsöffnungen auf.

Nach dem Klebstoffauftrag wird das noch liegende bzw. im Anfalten begriffene Filtermaterial unter einem relativ großen Winkel von insbesondere 30° oder mehr - speziell unter einem rechten Winkel - mit dem Kühlgas beaufschlagt. Hingegen hat es sich nach den Untersuchungen der Erfinder als zweckmäßig erwiesen, bei dem bereits gefalteten Filtermaterial die weitere Kühlung nicht durch Einblasen von Kühlgas in die Falten hinein vorzunehmen. Vielmehr wird der Faltenstrang durch im wesentlichen streifende Beaufschlagung des gefalteten Filtermaterialstranges längs seiner durch die Faltenkanten aufgespannten (virtuellen) Außenflächen gekühlt. Hierdurch werden unnötige Druck-/Zug-Belastungen der noch nicht endgültig fixierten Falten vermieden, was der mechanischen Stabilität und damit Qualität der gefertigten Filterelemente zugute kommt. Es versteht sich, daß die Kühlgas-Austrittsöffnungen so angeordnet und ausgebildet sind, daß jeweils eine entsprechende Ausrichtung des Kühlgasstromes erfolgt.

Im Sinne der oben erwähnten differenzierten Temperierung der Klebstofffäden bzw. -punkte von ihrem Auftrag bis zum Abschluß des Faltvorganges ist neben der mehrstufigen, punktuellen Kühlgaszuführung eine "Gegenstromkühlung", speziell des durch die Faltung erzeugten Faltenstranges, d. h. eine Beaufschlagung mit entgegen der Förderrichtung anströmender Kühlluft, vorteilhaft.

In besonderem Maße trägt zur angestrebten zeitabhängigen "Modellierung" der Klebstofffäden eine Temperaturmessung des Klebstoffs und/oder Filtermaterials und eine Steuerung der Kühlung, speziell des Kühlgasstromes und der Kühlgastemperatur, in Abhängigkeit von den Temperaturmeßergebnissen bei. Hierbei erfolgt die Temperaturmessung bevorzugt an mehreren Punkten des Prozesses, und zwar mindestens einmal vor dem Klebstoffauftrag und mehrmals danach. Die verschiedenen Temperaturmeßsignale werden hierbei einer zusammenhängenden Verarbeitung unterzogen. Über einzelne Stellglieder werden die Kühlgastemperatur und die Austrittsmengen an den einzelnen Austrittsöffnungen der Kühl-Zuführungseinrichtung gesteuert.

Dies kann in gewissen Grenzen durch Bedienpersonal der Anlage "von Hand" erfolgen. Bevorzugt ist indes eine geregelte Verfahrensführung zur Einstellung eines vorteilhaften Temperaturprofils der Klebstofffäden in den einzelnen Phasen des Verfahrens von der Bereitstellung des Heißklebers und des (vorteilhafterweise vorgewärmten) Filtermaterials bis zum Abschluß der Faltung.

In einer entsprechenden Ausführung der Herstellungsanlage hat die Kühlungssteuereinrichtung eine Regelstufe zur Realisierung einer automatischen Prozeßführung.

Vorteile und Zweckmäßigkeiten der Erfindung ergeben sich im übrigen aus den Unteransprüchen sowie der nachfolgenden Erläuterung eines bevorzugten Ausführungsbeispiels anhand der Figuren. Von diesen zeigen:
- Fig. 1: eine schematische Darstellung einer Anlage zur Herstellung von Fluidfilterelementes in Art eines Längsschnittes (Gesamtansicht), mit schematischer Darstellung der Luftführung, und
- Fig. 2: eine Ausschnittdarstellung aus Fig. 1, mit einem Steuerblock, zur besseren Verdeutlichung der Kühlluftzuführung und Temperaturmessungen.

Die Figuren zeigen eine Anlage 100 zur Herstellung von Fluidfilterelementen der oben beschriebenen Art, nachfolgend auch bezeichnet als Filtermaschine, sowie (schematisch) eine hierbei eingesetzte Abluft- und Kühlanlage 200. Die Filtermaschine 100 ist - abgesehen von den mit der Abluftaufbereitung, Temperaturmessung und Kühlluftzuführung zusammenhängenden Ausgestaltungen - an sich bekannt und wird daher hier nur insoweit beschrieben, als die Erläuterung der Erfindung dies erfordert.

Die Filtermaschine 100 umfaßt einen Filtervlies-Zuführabschnitt 101, eine Filtervlies-Heizstrecke 103, eine Prägeinrichtung 105, eine Klebstoff-Auftrageinrichtung 107, einen Faltabschnitt 109 und einen Abtransportabschnitt 111. Weiter gehört zur Herstellungsanlage eine in der Figur nicht dargestellte Vorrichtung zur Bereitstellung und Zuführung eines Heißschaumklebers zur Klebstoff-Auftrageinrichtung 107. Weiterhin umfaßt die Anlage gegebenenfalls (ebenfalls nicht dargestellte) Einrichtungen zum Ablängen des erzeugten, quasi-endlosen Faltenstranges in einzelne Filterelemente.

Im Filtervlies-Zuführabschnitt 101 wird das in Rollenform angelieferte Filtervlies 113 abgewickelt und ausgerichtet, in der Filtervlies-Heizstrecke 103 vorgewärmt und in der Prägeeinrichtung 105 mit Einprägungen zur Vorbestimmung der Faltkanten sowie (wahlweise) mit eingeprägten Vertiefungen bzw. Sicken zur mechanischen Versteifung und Abstandshaltung versehen. In der Klebstoff-Auftrageinrichtung 107 wird es mit Klebstofffäden bzw. -punkten aus Heißschaumkleber versehen, im Faltabschnitt 109 in Falten gelegt und im Abtransportabschnitt 111 als Faltenstrang 115 abtransportiert. Die Klebstofffäden sind in den Figuren nicht dargestellt, ihre Form und Anordnung ist dem Fachmann jedoch aus einschlägigen Veröffentlichungen - darunter der oben genannten PCT-Anmeldung der Anmelderin - bekannt.

Die Abluft- und Kühlanlage 200 umfaßt einen Abluftaufbereitungsblock 200A und eine Filterkühlanlage 200B. Sie weist eine Vielzahl von Abluft-Absaugleitungen und Kühlluft-Zuführungsleitungen auf, die in den Figuren der besseren Übersichtlichkeit halber nicht als konkrete Konstruktionselemente gezeigt, sondern nur symbolisch dargestellt sind.

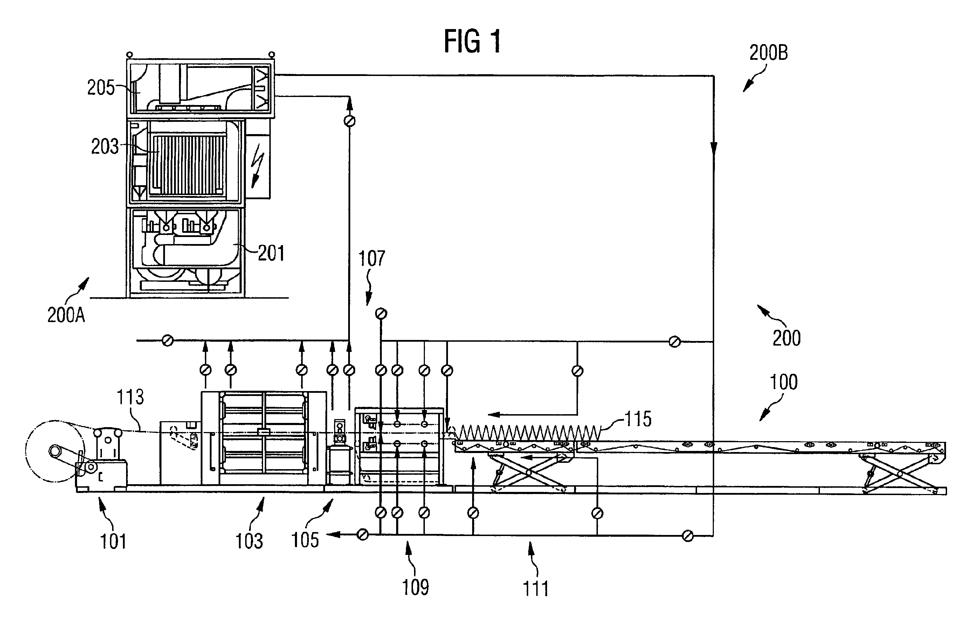

Zum Absaugen der im Fertigungsprozeß entstehenden, staubbelasteten Abluft ist über dem Verarbeitungsraum ein mit Abluftsträngen A(1) bis A(5), in denen jeweils ein Ablauf-Steuerelement DA(1) bis DA(5) angeordnet ist, verbundener Abluftventilator 201 vorgesehen. Im linken unteren Abschnitt von Fig. 1 ist zu erkennen, daß Abluft an mehreren Stellen der Filtervlies-Heizstrecke 103 und der Prägeeinrichtung 105 der Filtermaschine 100 abgesaugt wird. Ihm ist ein Abluft-Hauptsteuerelement D(A) vor- und eine Filtereinheit 203 zur Feinstfilterung der Abluft nachgeschaltet. Der Filtereinheit 203 ist ein mit Druckluft betriebener Wärmetauscher 205 nachgeschaltet, der der Abluft Wärme entzieht. Sie wird damit auf das für ihren Einsatz als Kühlluft erforderliche Temperaturniveau gekühlt.

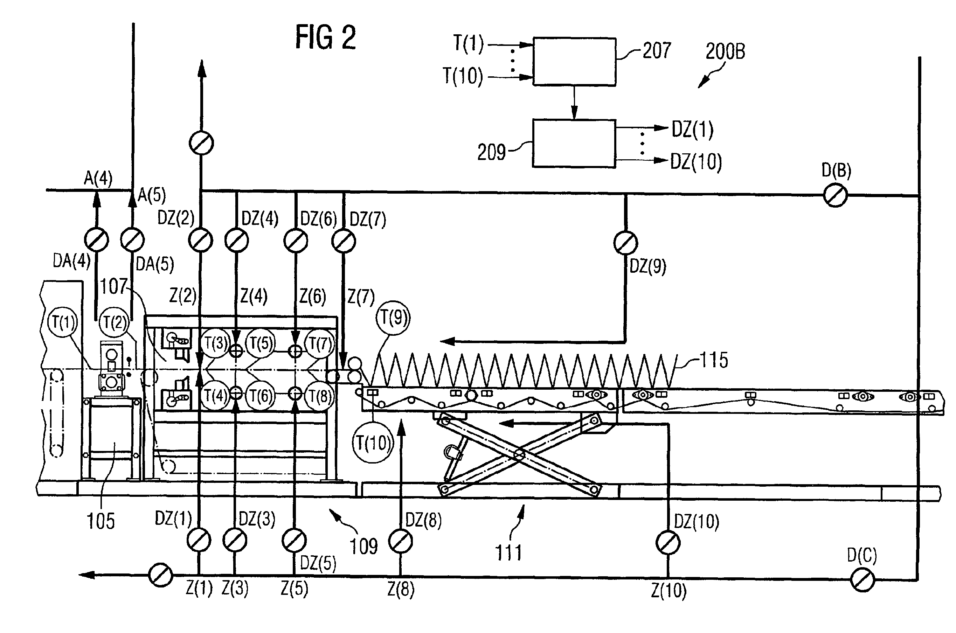

Die gereinigte und abgekühlte Abluft wird als Kühlluft über zwei Zuluft-Hauptsteuerelemente D(B) und D(C) der Ober- bzw. Unterseite der Filtermaschine 100 und damit des Filtervlieses 113 bzw. Faltenstranges 115 zugeführt. Wie in Fig. 2 besonders deutlich zu erkennen ist, wird die Kühlluft (Zuluft) dann über insgesamt zehn Zuluftstränge Z(1) bis Z(10) jeweils an fünf Punkten oberhalb und unterhalb des Filtervlieses 113 bzw. Faltenstranges 115 in den Faltabschnitt 109 und den Abtransportabschnitt 111 der Filtermaschine 100 eingeblasen. Zur Steuerung der Kühlluftzufuhr hat jeder Zuluftstrang Z(1) bis Z(10) ein Zuluft-Steuerelement DZ(1) bis DZ(10). Jeder der Zuluftstränge Z(1) bis Z(10) hat selbstverständlich eine (nicht dargestellte) Kühlluft-Austrittsöffnung, und die Pfeile an den einzelnen Zulunftsträngen kennzeichnen die Richtung der Beaufschlagung des Filtervlieses bzw. Faltenstranges mit Kühlluft.

Mit insgesamt zehn Temperaturmeßeinrichtungen T(1) bis T(10) wird an mehreren Punkten von der Eingangsseite der Klebstoff-Auftrageinrichtung 107 bis zum Eingangsbereich des Abtransportabschnittes 111 jeweils auf der Ober- und Unterseite des Filtervlieses 113 die Temperatur der dort aufgebrachten Klebstofffäden gemessen.

Die Meßsignale werden einer Temperatursignal-Auswertungseinheit 207 zugeführt, welche ausgangsseitig mit einer Kühlanlagen-Steuereinheit 209 verbunden ist. Diese steuert aufgrund des Ergebnisses der Auswertung der Temperatursignale die einzelnen Zuluft-Steuerelemente DZ(1) bis DZ(10) sowie den Abluftventilator 201 und den Wärmetauscher 205. Die Steuerung erfolgt in einer geschlossenen Regelschleife derart, daß ein vorgespeichertes räumliches Temperaturprofil der Klebstofffäden von der Klebstoff-Auftrageinrichtung 107 bis zum Eingangsbereich des Abtransportabschnittes 111 aufrecht erhalten wird. (Die Eingänge der Temperatursignal-Auswertungseinheit 207 sowie die Ausgänge der Kühlanlagen-Steuereinheit 209 sind in Fig. 2 im Interesse der Übersichtlichkeit der Darstellung nicht mit den Temperaturmeßeinrichtung bzw. Zuluft-Steuerelementen verbunden dargestellt, eine solche Verbindung muß aber selbstverständlich bestehen.)

Die Ausführung der Erfindung ist nicht auf die oben beschriebene Anlage beschränkt, sondern ebenso in einer Vielzahl abgewandelter Anlagen möglich, deren Konstruktion und steuerungstechnische Realisierung im Rahmen fachmännischen Handelns liegt.

### Bezugszeichenliste

- 100: Herstellungsanlage (Filtermaschine)
- 101: Filtervlies-Zuführabschnitt
- 103: Filtervlies-Heizstrecke
- 105: Prägeeinrichtung
- 107: Klebstoff-Auftrageinrichtung
- 109: Faltabschnitt
- 111: Abtransportabschnitt
- 113: Filtervlies
- 115: Faltenstrang
- 200: Abluft- und Kühlanlage
- 200A: Abluftaufbereitungsblock
- 200B: Filterkühlanlage
- 201: Abluftventilator
- 203: Filtereinheit
- 205: Wärmetauscher
- 207: Temperatursignal-Auswertungseinheit
- 209: Kühlanlagen-Steuereinheit
- A(1) bis A(5): Abluftstrang
- D(A): Abluft-Hauptsteuerelement
- D(B), D(C): Zuluft-Hauptsteuerelement
- DA(1) bis DA(5): Abluft-Hauptsteuerelement
- DZ(19 bis DZ(10): Steuerelement für Zuluft
- T(1) bis T(10): Temperaturmeßeinrichtungen
- Z(1) bis Z(10): Umluftstrang

## Patentansprüche

1. Verfahren zur Herstellung eines Fluidfilterelementes, das eine zickzack- oder mäanderförmig gefaltete und durch Verklebungen der Faltenwände fixierte Lage eines flächigen Filtermaterials aufweist, wobei die Verklebung durch linearen oder punktuellen Auftrag mittels eines Heißklebers erfolgt,
**dadurch gekennzeichnet, daß**
der Heißkleber nach dem Auftrag mit einem Kühlgas aktiv gekühlt wird.

2. Verfahren nach Anspruch 1,
**dadurch gekennzeichnet, daß**
als Kühlgas gefilterte und durch Wärmetausch abgekühlte Abluft genutzt wird, welche im Herstellungsprozeß, insbesondere bei einem Prägen des Filtermaterials, anfällt.

3. Verfahren nach Anspruch 1 oder 2,
**dadurch gekennzeichnet, daß**
das Kühlgas, insbesondere die abgekühlte Abluft, dem Filtermaterial in mehreren Phasen eines sich an den Klebstoffauftrag anschließenden Falt- und Transportvorganges zugeführt wird, um den Heißkleber schrittweise abzukühlen.

4. Verfahren nach einem der vorangehenden Ansprüche,
**dadurch gekennzeichnet, daß**
das Kühlgas von beiden Oberflächen des Filtermaterials zugeführt wird.

5. Verfahren nach einem der vorangehenden Ansprüche,
**dadurch gekennzeichnet, daß**
das liegende Filtermaterial nach dem Klebstoffauftrag unter einem Winkel von mehr als 30°, insbesondere unter einem rechten Winkel, zur Filtermaterialebene mit dem Kühlgas beaufschlagt wird.

6. Verfahren nach einem der vorangehenden Ansprüche,
**dadurch gekennzeichnet, daß**
das gefaltete Filtermaterial unter einem Winkel von weniger als 30°, insbesondere streifend, zu der durch die Faltenkanten aufgespannten virtuellen Außenfläche des Fluidfilterelementes mit dem Kühlgas beaufschlagt wird.

7. Verfahren nach einem der vorangehenden Ansprüche,
**dadurch gekennzeichnet, daß**
die Zuführung des Kühlgases mindestens in einer Phase des Abkühlvorganges entgegen einer Förderrichtung des Filtermaterials bzw. Fluidfilterelementes gerichtet erfolgt.

8. Verfahren nach einem der vorangehenden Ansprüche,
**dadurch gekennzeichnet, daß**
die Temperatur des Heißklebers und/oder des Filtermaterials gemessen und die Kühlgaszuführung in Abhängigkeit vom Meßergebnis gesteuert, insbesondere geregelt, wird.

9. Verfahren nach Anspruch 8,
**dadurch gekennzeichnet, daß**
die Temperatur des Heißklebers und/oder des Filtermaterials in mehreren Phasen des Herstellungsprozesses, insbesondere mindestens einmal vor und mehrmals nach dem Klebstoffauftrag auf das Filtermaterial, gemessen wird und die Meßergebnisse zusammenhängend zur Steuerung der Kühlgaszuführung ausgewertet werden.

10. Verfahren nach Anspruch 9 und einem der Ansprüche 3 bis 8,
**dadurch gekennzeichnet, daß**
die Meßergebnisse zur differenzierten Steuerung der Kühlgaszuführung in den einzelnen Phasen des Falt- und Transportvorganges zur Einstellung eines vorbestimmten Temperaturprofils hierbei benutzt werden.

11. Verfahren nach einem der vorangehenden Ansprüche,
**dadurch gekennzeichnet, daß**
das Filtermaterial vor dem Auftrag des Heißklebers erwärmt wird.

12. Verfahren nach einem der vorangehenden Ansprüche,
**dadurch gekennzeichnet, daß**
als Heißkleber ein Heißschaumkleber eingesetzt wird.

13. Verfahren nach einem der vorangehenden Ansprüche,
**dadurch gekennzeichnet, daß**
der Heißkleber mit nicht-konstantem Austragvolumen pro Zeiteinheit und mit in Förderrichtung des Filtermaterials nicht-konstanter Höhe aufgetragen wird.

14. Vorrichtung zur Durchführung des Verfahrens nach einem der vorangehenden Ansprüche,
**gekennzeichnet durch**
eine Kühlanlage (200) zur gesteuerten Zuführung des Kühlgases zu dem auf das Filtermaterial (113, 115) aufgetragenen Heißkleber.

15. Vorrichtung nach Anspruch 14,
**dadurch gekennzeichnet, daß**
die Kühlanlage eine Abluft-Aufbereitungs- und Kühleinrichtung (200A) zur Filterung und Abkühlung von aus einer Herstellungsanlage (100), insbesondere einer Prägestufe (105), abgesaugter Abluft aufweist.

16. Vorrichtung nach Anspruch 14 oder 15,
**gekennzeichnet durch**
eine Mehrzahl von Kühlgassträngen (Z(1) bis Z(10)), die längs einer Falt- und Transporteinrichtung (109, 111) zum Falten des mit dem Heißkleber versehenen Filtermaterials (113) und zum Abtransport des gefalteten Filtermaterials (115) angeordnet sind.

17. Vorrichtung nach einem der Ansprüche 14 bis 16,
**gekennzeichnet durch**
beidseits des Filtermaterials (113) bzw. gefalteten Fluidfilterstranges (115) angeordnete Kühlgas-Austrittsöffnungen.

18. Vorrichtung nach einem der Ansprüche 14 bis 17,
**gekennzeichnet durch**
mindestens eine Temperaturmeßeinrichtung (T(1) bis T(10)) zur Messung der Temperatur des Heißklebers und/oder des Filtermaterials (113, 115) und eine mit der Temperaturmeßeinrichtung eingangsseitig verbundene Kühlungssteuereinrichtung (209) zur Steuerung der Kühlgaszuführung, insbesondere des pro Zeiteinheit zugeführten Kühlgasvolumens und/oder der Kühlgastemperatur, in Abhängigkeit vom Ausgangssignal der Temperaturmeßeinrichtung.

19. Vorrichtung nach Anspruch 18,
**dadurch gekennzeichnet, daß**
die Kühlungssteuereinrichtung (209) eine Regelstufe zur automatischen Einstellung mindestens der Temperatur des Heißklebers an einem vorbestimmten Punkt des Falt- und Transportvorganges, insbesondere zur Einstellung und automatischen Aufrechterhaltung eines vorbestimmten Temperaturprofils bei dem Falt- und Transportvorgang, aufweist.
